(19) Europäisches Patentamt
European Patent Office
Office européen des brevets

(11) Publication number: **0 045 885**
**B1**

# (12) EUROPEAN PATENT SPECIFICATION

(45) Date of publication of patent specification: **24.05.89**

(51) Int. Cl.[4]: **C 08 F 10/02**, C 08 F 4/64, C 08 F 4/68, C 08 F 4/02

(21) Application number: **81105856.9**

(22) Date of filing: **24.07.81**

## (54) Catalyst components for polymerizing ethylene.

(30) Priority: **24.07.80 IT 2365880**

(43) Date of publication of application:
**17.02.82 Bulletin 82/07**

(45) Publication of the grant of the patent:
**24.05.89 Bulletin 89/21**

(84) Designated Contracting States:
**BE DE FR GB NL**

(56) References cited:
**EP-A-0 002 221**
**EP-A-0 007 425**
**EP-A-0 036 660**
**BE-A- 867 400**
**FR-A-2 147 905**
**FR-A-2 265 768**

(73) Proprietor: **Montedison S.p.A.**
**Patents & Licensing Dept. Foro Buonaparte, 31**
**P.O. Box 10528**
**I-20121 Milan (IT)**

(72) Inventor: **Cuffiani, Illaro**
**33, via Bagaro**
**Ferrara (IT)**
Inventor: **Galli, Paolo**
**106, viale Po**
**Ferrara (IT)**
Inventor: **Zucchini, Umberto**
**11, via Leopardi**
**Ferrara (IT)**

(74) Representative: **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun. Bräuhausstrasse 4**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 045 885 B1

## Description

This invention relates to components of catalysts for polymerizing ethylene.

In particular it refers to components of catalysts which permit to polymerize, with high yields ethylene or mixtures thereof with up to 20%, referred to the total, of a higher alpha-olefin, such as propylene, to polymers having a broad distribution of molecular weights.

Examples of catalyst systems for the polymerization of ethylene or mixtures thereof with higher alpha-olefins are described in several patents, and the polymers obtained show a rather narrow distribution of molecular weights. Said polymers are suitable for injection molding and for other applications but are not useful for the manufacturing of articles by extrusion or blowing. In fact it is known that, due to the narrow distribution of the molecular weights, the polymers subject to breaking phenomena of the molten mass during the forming process and, furthermore, the articles prepared according to the above-mentioned techniques present knurlings.

In practice, the value of the ratio MI N/MI E is assumed; as a measure of the breadth of the molecular weight distribution, MI N and MI E are the melt indexes of the polymer measured at 190°C with a weight of 10,000 Kg and a 2,160 Kg respectively (ASTM D 1238). Polymers with about the same value of melt index MI E have broader molecular weight distribution if the value of the MI N is higher.

Different methods can be used in order to obtain polymers with a rather broad molecular weight distribution. The simplest consists in suitably modifying the catalyst system, but such a method often involves several drawbacks, such as, for example, an excessive decreasing of the catalyst activity and/or difficulties in the regulation of the molecular weight of polymers.

Thus, EP—A—36660 discloses components of catalysts for the polymerization of olefins, which are obtained by reacting the reaction product of a magnesium halide or hydroxyhalide and a titanium alkoxide, with a precipitating agent consisting of a halide or an oxygen-containing halide of a metal of the IV A or IV B Group, and finally treating the reaction product with a halide ion exchanging source such as titanium tetrachloride.

EP—A—7425 discloses catalyst components similar to the ones of EP—A—36660 except that an organometallic compound is used as a precipitating agent.

All of such catalyst components give rise to olefin polymers endowed with a narrow molecular weight distribution.

Similar olefin polymers are also obtained by the use of catalyst components such as those disclosed in EP—A—2221 and FR—A—2 265 768.

The catalyst components of EP—A—2221 are prepared by reacting a magnesium alcoholate with a halogenated transition metal compound such as $TiCl_4$ and then with an halogenating agent. Catalyst components are thus obtained having high activity, but no evident effectiveness in producing polymers of broad molecular weight distribution.

Finally, FR—A—2 265 768 discloses a catalyst component having a high activity, obtained by reacting an organo magnesium compound with a transition metal compound containing alkoxide groups to form a solid, and by then treating the solid with a Lewis acid such as $SiCl_4$ or $TiCl_4$. Also in this case, no polymer of a broad molecular weight distribution is obtained.

The Applicant has now surprisingly found new components of catalysts for polymerizing ethylene which have high activity and permit to obtain ethylene polymers having a broad distribution of molecular weights without presenting the disadvantages mentioned hereinbefore. Such catalyst components are characterized by a high titanium content and by a low chlorine content.

The catalyst components forming the object of the present invention comprise the product obtained by reacting the product of the reaction between.

(A) a magnesium compound selected from

1) compounds of formula:

$$X_nMg(OR)_{2-n}$$

wherein X is Cl or Br or a group —OH; R is an alkyl, an aryl or a cycloalkyl having 1 to 20 carbon atoms, or a group —COR′ in which R′ is a hydrocarbon radical equal to R;$0 \leq n \leq 2$

2) MgO, $Mg(OH)_2$, XMgOH, in which X is Cl or Br; and

(B) a compound of Ti, V or Zr having at least two metal-oxygen bonds of the type Ti—OR, V—OR or Zr—OR in which R is an alkyl, an aryl or a cycloalkyl having 1 to 20 carbon atoms or the group

$$\overset{|}{CH_3—C}=CH—CO—CH_3$$

with a silicon component (comprising one or two silicon compounds) showing a halogenating and a reducing action, or a reducing action and then with

(C) one halogenated compound of a transition metal of groups IV, V, VI of the Periodic System having formula $MO_mX_n$ in which M=transition metal, for example Ti, V or Zr, X=Cl or Br, $m \geq 0$, $n > 0$, $2m+n$ is equal to the valence of metal M.

Preferred catalyst components consist of the product which is obtained by reacting the product of the

reaction between $MgCl_2$ and $Ti(O—n—C_4H_9)_4$ with a mixture of $SiCl_4$ and polymethylhydrosiloxane and then with $TiCl_4$; the product which is obtained by reacting the product of the reaction between $MgCl_2$ and $Ti(O—n—C_4H_9)_4$ with a mixture of $SiCl_4$ and polymethylhydrosiloxane and then with $VOCl_3$; or the product which is obtained by reacting the product of the reaction between $MgCl_2$ and $Ti(O—n—C_4H_9)_4$ with polymethylhydrosiloxane and then with $TiCl_4$.

The invention is further directed to catalysts for polymerizing ethylene and mixtures thereof with alpha-olefins consisting of a combination of a catalyst component as defined above or of a catalyst component comprising the product which is obtained by reacting the reaction product between compound (A) and compound (B) as defined above in one step with compound (C) as defined above and of an aluminium-alkyl compound.

Preferred catalysts consist of a combination of a catalyst component obtained by reacting the product of the reaction between $MgCl_2$ and $Ti(O—n—C_4H_9)_4$ with $TiCl_4$ and with an aluminium-alkyl compound;

or of a combination of the product obtained by reaction of $TiCl_4$ with the product of the reaction between $MgCl_2$ and $Ti(OC_2H_5)_4$ with an aluminium compound.

Examples of compounds (A) are: $MgCl_2$, which is the preferred compound, $MgBr_2$, the magnesium mono- and dialkoholates, as $Mg(OC_2H_5)_2$, $Mg(O—n—C_4H_9)_2$, $C_2H_5OMgCl$, magnesium carboxylates as $(CH_2COO)_2Mg$ and ClMgOH.

Examples of compounds (B) are $Ti(OC_2H_5)_4$, $Ti(O—n—C_4H_9)_4$, $Ti(O—i—C_3H_7)_4$, $Ti(OC_6H_5)_4$, $V(O—i—C_3H_7)_4$, $VO(O—i—C_3H_7)_3$, titanium triacetylacetonate, $Ti(OCH_3)_2(OC_2H_5)_2$, $Zr(O—n—C_4H_9)_4$. It is possible also to use halogen-alcoholates such as $ClTi(O—n—C_4H_9)_3$.

Examples of compounds (C) are: $TiCl_4$, $TiBr_4$, $VCl_3$, $VCl_4$, $VOCl_3$, $ZrCl_4$, the preferred compound being $TiCl_4$.

The metal of halogenated compound (C) may be the same as or different from the one of compound (B).

Compounds (A) and (B) are reacted with an atomic ratio transition metal/Mg ranging from 0.02 to 20, preferably from 0.1 to 3. The reaction is carried out in an aliphatic, a cycloaliphatic or an aromatic hydrocarbon diluent or in the absence of diluent, at a temperature ranging from 20°C to 200°C to obtain a homogeneous product which is then reacted with halogenated compound (C).

Compound (C) is employed in such amounts as to have a (C)/(B) molar ratio ranging from 2 to 20, preferably from 4 to 10.

The reaction between the reaction product (A) with (B) and the compound (C) is generally carried out at temperatures ranging from 10°C to 200°C, preferably from 50°C to 150°C; compound (C) may be employed as such or diluted in a solvent like the ones indicated for the reaction between (A) and (B).

For preparing the catalyst components of the invention, prior to the treatment with compound (C), the reaction product of (A) with (B) is reacted with a silicium compound capable of exerting a reducing action or a halogenating and simultaneously reducing action on compound B. Si-hydrides and compounds containing atoms of halogen and hydrogen directly bound to a silicium atom are suitable to this purpose. Examples of such compounds are: $Si_3H_8$, polysilanes $(SiH)_x$ where x has a value of at least 2, $(C_6H_5)_3SiH$, $(C_2H_5O)_3SiH$, polyhydrosiloxanes containing the monomeric unit

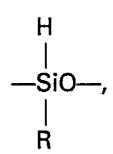

in which R is H, a halogen, an alkyl with 1 to 10 carbon atoms, an aryl, an alkoxyl, an aryloxy or a carboxyl, and having a polymerization degree comprised between 2 and 1000, preferably between 3 and 100; as examples of such polyhydrosiloxanes are: $(CH_3HSiO)_4$, $H_3Si—O—SiH_2—OSiH_3$ and the polymethylhydrosiloxane (PMHS) of formula

$$(CH_3)_3SiO[(CH_2)HSiO]_nSi(CH_3)_3,$$

wherein n has a value of about 35.

Examples of silicium compounds capable of exerting simultaneously a halogenating and a reducing action are the following: $SiHCl_3$, $SiH_2Cl_2$, $SiH_3Cl$, $CH_3SiCl_2H$ and $C_2H_5SiClH_2$.

Of course, mixtures of two silicium compounds, one of which having only a halogenating action (such as silicon) halides, preferably silicon chlorides, especially $SiCl_4$, $Si_4Cl_{10}$, $Si_2OCl_6$, $Si(OC_2H_5)Cl_3$ and $C_2H_5SiCl_3$) and the other only a reducing action can be used.

The silicon compounds exerting a halogenating action are capable of substituting at least a group —OR of compound (B) with a halogen atom.

The silicon compound is employed in such an amount as to have from 0.5 to 100, preferably from 1 to 30, gram atoms of halogen per gram atom of Ti, V or Zr and from 0.1 to 100, preferably from 0.5 to 20, gram equivalents of reducing agent per gram atom of Ti, V or Zr.

The reaction with the silicon compounds is carried out at a temperature ranging from 20°C to 200°C and, also in this case, the use of a hydrocarbon diluent is optional.

Catalyst components prepared by reacting compound (A) with compound (B) and by successively reacting the resulting product with one or more silicon compounds having a halogenating and a reducing action are described in Belgian patent No. 867,400, but the corresponding catalysts provide ethylene polymers having a narrow molecular weight distribution.

By suitably choosing the catalyst component preparation conditions it is possible to affect the distribution of the molecular weights.

The catalyst components of the present invention are employed in combination with an aluminium-alkyl compound as cocatalyst, preferably an Al-trialkyl.

The invention is also directed to the polymerization of ethylene and the mixtures thereof with alpha-olefins which is carried out according to the known methods in a liquid phase in the presence of an inert hydrocarbon diluent or in a gas phase by the use of the above defined catalysts.

The polymerization temperature is generally comprised between 40° and 120°C. Higher temperatures ranging for example between 150° and 300°C can be used.

In the following examples, which are given to better illustrate this invention without being however a limitation thereof, the polymerization of ethylene was carried out as described in Example 1, i.e. in 1000 cc of n-hexane containing 1.5 g of $Al(i—C_4H_9)_3$, at 75°C and at a pressure of $14.2 \cdot 10^5$ Pa (14 atm)., for 4 hours; the partial pressures of hydrogen (for the regulation of molecular weight) and of ethylene are specified in the description of the examples.

Examples 1 to 4 (Table I) refer to catalyst components prepared by directly treating the reaction product of $MgCl_2$ with Ti alcoholate with $TiCl_4$.

Examples A, B, C, D (Table II) are comparative examples that show that catalyst components obtained by reacting reaction products of $MgCl_2$+Ti alcoholate with silicium compounds provide polymers having a narrow molecular weight distribution (the MI N/MI E ratio is not higher than 8.5).

Furthermore, the catalyst components prepared in Examples A and B are employed in Examples 5 to 12.

Examples 5 to 14 (Table III) relate to catalyst components prepared by the use of silicium compounds.

Example 1

2.4 g of anhydrous $MgCl_2$ were dissolved in 17 g of $Ti(O—n—C_4H_9)_4$ by heating at 140°C under stirring for 3 hours. The solution obtained was diluted with 45 cc of Isopar G® and 95 g of $TiCl_4$ were added thereto in 90 minutes; the mixture was then heated at 135°C under stirring for 2 hours. At the end the resulting solid product was isolated by filtration at 60°C and repeatedly washed with 50 $cm^3$ of anhydrous n-hexane at room temperature till disappearance of the chlorine ions from the solvent. After drying under vacuum at 40°C for 3 hours, a catalyst component containing 22.3% of Ti was obtained.

For the ethylene polymerization test, 1000 $cm^3$ of anhydrous n-hexane, 1.5 g of $Al(i—C_4H_9)_3$ as cocatalyst and 0.0082 g of the above-mentioned catalyst components were introduced in the order into a stainless steel 2.5-liter autoclave equipped with a stirrer. The autoclave was heated at 75°C and $3 \cdot 10^5$ Pa (3 atm.) hydrogen with $10.1 \cdot 10^5$ Pa (10 atm.) ethylene were introduced feeding continuously ethylene to maintain the total pressure at 14.2 $10^5$ Pa (14 atm.). After 4 hours the polymerization was interrupted. The polymer was isolated by filtration and then was dried. The results of the polymerisation test are reported in Table I.

Example 2

4.75 g of anhydrous $MgCl_2$ and 23.0 g of $Ti(OC_2H_5)_4$ were added to 90 $cm^3$ of Isopar G®, whereupon the mixture was heated at 100°C under stirring for 3 hours. 95 g of $TiCl_4$ were added in 90 minutes to the resulting solution which was heated at 135°C under stirring for 2 hours. By filtration at 60°C a solid product was isolated which was repeatedly washed at room temperature with 50 $cm^3$ of anhydrous n-hexane until thorough removal of free $TiCl_4$ from the product. The catalyst component so prepared, after drying under vacuum at 40°C for 3 hours, containing 29.45% of Ti.

The result of the ethylene polymerization test ($H_2$ pressure: $3 \cdot 10^5$ Pa (3 atm.), $C_2H_4$ pressure: $10.1 \cdot 10^5$ Pa (10 atm.) is recorded on Table I.

Example 3

2.4 g of anhydrous $MgCl_2$ were dissolved in 17 g of $Ti(O—n—C_4H_9)_4$ by heating at 140°C under stirring for 3 hours. The resulting solution was diluted with 45 $cm^3$ of n-heptane, 95 g of $TiCl_4$ were added thereto in 90 minutes and the mixture was then heated at 98°C under stirring for 2 hours. The solid product was isolated by filtration repeatedly washed at room temperature with 50 $cm^3$ of n-heptane and then dried under vacuum at 40°C for 3 hours. A catalyst component containing 22.8% of Ti was obtained.

The result of the polymerization test ($H_2$ pressure: $4.1 \cdot 10^5$ Pa (4 atm.), $C_2H_4$ pressure: $9.1 \cdot 10^5$ Pa (9 atm.)) is recorded on Table I.

Example 4

2.4 g of anhydrous $MgCl_2$ were dissolved in 17 g of $Ti(O—n—C_4H_9)_4$ by heating at 140°C under stirring

for 3 hours. The solution so obtained was added, after dilution with 45 $cm^3$ of anhydrous n-hexane, with 19 g of $TiCl_4$ in 90 minutes at room temperature, and the resulting suspension was then heated at 60°C under stirring for 2 hours. The solid product was separated by filtration at 60°C and was repeatedly washed with 50 $cm^3$ of anhydrous n-hexane at room temperature till the disappearance of the chlorine ions from the solvent.

After drying under vacuum at 40°C for 3 hours, a catalyst component containing 8.6% of Ti was obtained.

The result of the polymerization test ($H_2$ pressure: $3 \cdot 10^5$ Pa (3 atm.), $C_2H_4$ pressure: $10.1 \cdot 10^5$ Pa (10 atm.)) is recorded on Table I.

TABLE I
Silicium-free catalytic components

| Example No. | Direct treatment of reaction product (A)+(B) with $TiCl_4$ | | | | % of Ti in catalytic component | Polymerization | | | Polyethylene | |
|---|---|---|---|---|---|---|---|---|---|---|
| | Diluent $cm^3$ | $TiCl_4$ g | Temperature °C | Time hours | | Catalytic component g | Polymer g | Yield g polym./g Ti | MI E g/10 min. | MI N / MI E |
| 1* | 45 (Isopar G®***) | 95 | 135 | 2 | 22.3 | 0.0082 | 291 | 160,000 | 0.09 | 12.0 |
| 2** | 90 (Isopar G®) | 95 | 135 | 2 | 29.45 | 0.0080 | 269 | 114,000 | 0.075 | 13.3 |
| 3* | 45 (n-heptane) | 95 | 98 | 2 | 22.8 | 0.0095 | 342 | 158,000 | 0.15 | 10.5 |
| 4* | 45 | 19 | 60 | 2 | 8.6 | 0.0080 | 420 | 609,000 | 0.23 | 9.6 |

* (A)+(B): reaction product of 2.4 g of $MgCl_2$ with 17 g of $Ti(O-n-C_4H_9)_4$.
** (A)+(B): reaction product of 4.75 g of $MgCl_2$ with 23.0 g of $Ti(OC_2H_5)_4$.
*** Mixture of isoparaffinic hydrocarbons boiling in the temperature range of from 158°C to 172.5°C.

Example A

A catalytic component of the type (A)+(B)+silicium compound, like those described in Belgian patent No. 867,400, was prepared from the following reagents:

2.15 g of anhydrous $MgCl_2$
16.6 g of $Ti(O-n-C_4H_9)_4$
32 $cm^3$ of anhydrous n-heptane
12.5 g of $SiCl_4$
8.9 g of PMHS (polymethylhydrosiloxane, produced and sold by Farbenfabriken Bayer with the commercial name Baysilon MH 15®). By operating as indicated in the description it was possible to obtain 10 g of a solid catalytic component containing 15.5% of Ti.

The result of the ethylene polymerization test ($H_2$ pressure: $5.1 \cdot 10^5$ Pa (5 atm.), $C_2H_4$ pressure: $8.1 \cdot 10^3$ Pa (8 atm.)) is recorded on Table II.

Example B

A catalytic component was prepared as in Example A by employing:

2.2 g of anhydrous $MgCl_2$
17 g of $Ti(O-n-C_4H_9)_4$
34 $cm^3$ of anhydrous n-heptane
38 g of $SiCl_4$
17 g of PMHS.

7 g of a solid catalytic component containing 8.0% of Ti were obtained.

The result of the ethylene polymerization test ($H_2$ pressure: $5.1 \cdot 10^5$ Pa (5 atm.), $C_2H_4$ pressure: $8.1 \cdot 10^5$ Pa (8 atm.)) is recorded on Table II.

Example C

2.4 g of anhydrous $MgCl_2$ were added to 17 g of $Ti(O-n-C_4H_9)_4$ and the mixture was heated at 140°C for 3 hours, so obtaining a solution which was diluted with 45 $cm^3$ of n-hexane. 17 g of $SiCl_4$ were added at room temperature to such solution and successively, under stirring, the mixture was heated at 60°C for 2 hours. The resulting solid product was separated by filtration at 60°C, it was repeatedly washed with portions of 50 $cm^3$ of anhydrous n-hexane at room temperature until disappearance of the chlorine ions from the solvent and then it was dried under vacuum at 40°C for 3 hours. The catalytic component so obtained contained 2.5% of Ti. The result of the polymerization test ($H_2$ pressure: $3 \cdot 10^5$ Pa (3 atm.), $C_2H_4$ pressure: $10.1 \cdot 10^5$ Pa (10 atm.)) is recorded on Table II.

Example D

A solution of $MgCl_2$ in $Ti(O-n-C_4H_9)_4$, diluted with n-hexane and prepared as described in Example C, was additioned with 17 g of polymethylhydrosiloxane at 45°C, under stirring, in 90 minutes; subsequently, in 90 minutes too, 85 g of $SiCl_4$ were added. The suspension so obtained was heated at 60°C under stirring for 2 hours. By filtering such suspension at 60°C, a catalytic component was isolated, which was washed and dried as described in Example C; its Ti content was of 4.5%.

The result of the polymerization test ($H_2$ pressure: $3 \cdot 10^5$ Pa (3 atm.), $C_2H_4$ pressure: $10.1 \cdot 10^5$ Pa (10 atm.)) is recorded on Table II.

TABLE II
Comparative Examples

| Example No. | % of Ti in the catalyst component | Polymerization | | | Polyethylene | |
|---|---|---|---|---|---|---|
| | | Catalyst component g | Polymer g | Yield g polym./g Ti | MI E g/10 min. | MI N / MI E |
| A | 15.5 | 0.0100 | 279 | 180,000 | 0.9 | 8.0 |
| B | 8.0 | 0.0056 | 148 | 330,000 | 0.85 | 8.5 |
| C | 2.5 | 0.0097 | 225 | 930,000 | 0.4 | 8.5 |
| D | 4.5 | 0.0088 | 226 | 571,000 | 0.28 | 8.4 |

Example 5

10 g of a catalyst component prepared according to Example A were suspended in 40 $cm^3$ of anhydrous n-heptane containing 42 g of $TiCl_4$; the mixture was heated at 98°C under stirring for 2 hours, then it was allowed to cool to 60°C and the liquid phase was removed by syphoning. The solid residue was

repeatedly washed at room temperature with portions of 50 $cm^3$ of anhydrous n-hexane until disappearance of the chlorine ions from the solvent, and finally it was dried under vacuum at 40°C for 3 hours.

The catalytic component so obtained contained 23.0% of Ti. The result of the ethylene polymerization test ($H_2$ pressure: $5.1 \cdot 10^5$ Pa (5 atm.), $C_2H_4$ pressure: $8.1 \cdot 10^5$ Pa (8 atm.)) is recorded on Table III.

Examples 6, 7, 8, 9, and 10

Always starting from 10 g of a catalyst component prepared as in Example A, other components were prepared as described in Example 5, but with the differences indicated on Table III.

The results of the polymerization tests ($H_2$ pressure: $5.1 \cdot 10^5$ Pa (5 atm.), $C_2H_4$ pressure: $8.1 \cdot 10^5$ Pa (8 atm.)) are recorded on the same Table.

Example 11

10 g of a catalyst component prepared as in Example B were reacted with the amount of $TiCl_4$ and under the conditions as indicated on Table III, obtaining a catalyst component containing 12.05% of Ti which was used for carrying out the polymerization of ethylene ($H_2$ pressure: $5.1 \cdot 10^5$ Pa (5 atm.), $C_2H_4$ pressure: $8.1 \cdot 10^5$ Pa (8 atm.)). The result of such test is recorded on Table III.

Example 12

10 g of a catalyst component prepared as in Example A were suspended in 40 $cm^3$ of anhydrous n-hexane at room temperature and the resulting suspension was additioned, in 30 minutes and under stirring, with 55 g of $VOCl_3$. The mixture was heated at 68°C under stirring for 1 hour. At 60°C, after decantation of the solid product, the liquid phase was removed by syphoning. The solid product was repeatedly washed at room temperature with 50 $cm^3$ of anhydrous n-hexane and then dried under vacuum at 40°C for 3 hours. A catalyst component was obtained which contained 4.95% of Ti and 21.0% of V.

The result of the polymerization test ($H_2$ pressure: $5.1 \cdot 10^5$ Pa (5 atm.), $C_2H_4$ pressure: $8.1 \cdot 10^5$ Pa (8 atm.) is recorded on Table III.

Example 13

2.4 g of anhydrous $MgCl_2$ were dissolved in 17 g of $Ti(O—n—C_4H_9)_4$ by heating at 140°C under stirring for 3 hours. The resulting solution was diluted with 45 $cm^3$ of Isopar G® (a mixture of isoparaffinic hydrocarbons produced by Esso Chemical Co., boiling in the temperature range of from 158° to 172.5°C) and maintaining said solution at 45°C and under stirring, 17 g of polymethylhydrosiloxane were added thereto in 90 minutes. The resulting suspension was additioned, always at 45°C, with 95 g of $TiCl_4$ in 90 minutes, whereupon it was reacted at 135°C under stirring for 2 hours. After cooling to 60°C, the solid catalytic component so formed was isolated by filtration and it was repeatedly washed, at room temperature, with 50 $cm^3$ of n-hexane every time. Aftery drying under vacuum at 40°C for 3 hours, such catalyst component contained 25.75% of Ti.

The result of the polymerization test ($H_2$ pressure: $7.1 \cdot 10^5$ Pa (7 atm.), $C_2H_4$ pressure: $6.1 \cdot 10^5$ Pa (6 atm.)) is recorded on Table III.

Example 14

The solution of $MgCl_2$ in $Ti(O—n—C_4H_9)_4$ diluted with n-hexane and prepared as described in Example C was additioned, in 90 minutes, at 45°C and under stirring, with 17 g of polymethylhydrosiloxane and successively, always in 90 minutes, with 95 g of $TiCl_4$. The resulting suspension was then heated at 60°C going on stirring at such temperature for 2 hours. By filtering the suspension at 60°C a solid catalyst component was isolated which was repeatedly washed with 50 $cm^3$ of n-hexane every time until disappearance of the chlorine ions from the solvent; finally it was dried under vacuum at 40°C for 3 hours.

The catalyst component so prepared contained 25.45% of Ti. The result of the polymerization test ($H_2$ pressure: $5.1 \cdot 10^5$ Pa (5 atm.), $C_2H_4$ pressure: $8.1 \cdot 10^5$ Pa (8 atm.)) is recorded on Table III.

TABLE III
Silicium-containing catalyst components

| Example No. | Treatment of intermediate catalytic components (containing silicium) | | | | % of Ti in the catal. component | Polymerization | | | Polyethylene | |
|---|---|---|---|---|---|---|---|---|---|---|
| | Diluent $cm^3$ | $TiCl_4$ g | Temper. °C | Time hours | | Catalyst component g | Polymer g | Yield g polym./g Ti | MI E g/10 min. | MI N / MI E |
| 5* | 40 (n-heptane) | 42 | 98 | 2 | 23.0 | 0.0087 | 200 | 100,000 | 0.21 | 11.5 |
| 6* | 40 (n-heptane) | 84 | 98 | 2 | 20.2 | 0.0086 | 234 | 135,000 | 0.39 | 10.8 |
| 7* | — | 84 | 60 | 2 | 18.8 | 0.0063 | 248 | 210,000 | 0.61 | 10.7 |
| 8* | — | 84 | 100 | 2 | 21.35 | 0.009 | 160 | 83,000 | 0.25 | 12.5 |
| 9* | — | 84 | 136 | 2 | 23.15 | 0.010 | 215 | 93,000 | 0.14 | 11.4 |
| 10* | — | 84 | 136 | 5 | 21.45 | 0.011 | 197 | 84,000 | 0.09 | 12.0 |
| 11** | — | 130 | 136 | 2 | 12.05 | 0.006 | 188 | 261,000 | 0.27 | 10.7 |
| 12* | 40 (n-hexane) | [55 $VOCl_3$] | 68 | 1 | 1,95 Ti 21.0 V | 0.021 | 20 | 19,000 | 0.065 | 18.8 |
| 13 | 45 (Isopar G®) | 95 | 135 | 2 | 25.75 | 0.0132 | 200 | 59,000 | 0.12 | 14.6 |
| 14 | 45 (n-hexane) | 95 | 60 | 2 | 25.45 | 0.0115 | 235 | 80,000 | 0.20 | 10.6 |

* 10 g of the catalyst component of Example A were employed.
** 10 g of the catalyst component of Example B were employed.

## Claims

1. Catalyst components, consisting of the product obtained by reacting the product of the reaction between

(A) a magnesium compound selected from

1) compounds of formula

$$X_nMg(OR)_{2-n}$$

wherein X is Cl or Br or a group —OH; R is an alkyl, an aryl or a cycloalkyl having 1 to 20 carbon atoms, or a group COR′ in which R′ is a hydrocarbon radical as specified for R; $0 \leq n \leq 2$;

2) MgO, $Mg(OH)_2$, XMgOH, in which X is Cl or Br; and

(B) a compound of titanium, vanadium or zirconium having at least two metal-oxygen bonds of the type Ti—OR, V—OR or Zr—OR, in which R is an alkyl, an aryl or a cycloalkyl having 1 to 20 carbon atoms or the group

$$CH_3—\overset{|}{C}=CH—CO—CH_3$$

with a silicon component (comprising one or two silicon compounds) showing a halogenating and a reducing action, or a reducing action and then with

(C) one halogenated compound of a transition metal of Groups IV, V, VI of the Periodic System of Formula $MO_mX_n$ in which M=transition metal, X=Cl or Br, $M \geq 0$, $n > 0$, $2m+n$ being equal to the valence of metal M.

2. Catalyst components according to claim 1, consisting of the product which is obtained by reacting the product of the reaction between $MgCl_2$ and $Ti(O—n—C_4H_9)_4$ with a mixture of $SiCl_4$ and polymethylhydrosiloxane and then with $TiCl_4$.

3. Catalyst components according to claim 1, consisting of the product which is obtained by reacting the product of the reaction between $MgCl_2$ and $Ti(O—n—C_4H_9)_4$ with a mixture of $SiCl_4$ and polymethylhydrosiloxane and then with $VOCl_3$.

4. Catalyst components according to claim 1, consisting of the product which is obtained by reacting the product of the reaction between $MgCl_2$ and $Ti(O—n—C_4H_9)_4$ with polymethylhydrosiloxane and then with $TiCl_4$.

5. Catalysts for polymerizing ethylene and mixtures thereof with alpha-olefins consisting of a combination of a catalyst component according to any one of claims 1 to 4 or of a catalyst component comprising the product which is obtained by reacting the reaction product between compound (A) and compound (B) as defined in claim 1 in one step with compound (C) as defined in claim 1 with an aluminium-alkyl compound.

6. Catalysts according to claim 5, consisting of a combination of a catalyst component obtained by reacting the product of the reaction between $MgCl_2$ and $Ti(O—n—C_4H_9)_4$ with $TiCl_4$ and with an aluminium-alkyl compound.

7. Catalysts according to claim 5, consisting of a combination of the product obtained by reaction of $TiCl_4$ with the product of the reaction between $MgCl_2$ and $Ti(OC_2H_5)_4$ with an aluminium-alkyl compound.

8. Process for the polymerisation of ethylene and mixtures thereof with alpha-olefins characterised in that it is carried out in the presence of a catalyst according to any one of claims 5 to 7.

## Patentansprüche

1. Katalysatorkomponenten, bestehend aus dem Produkt, erhalten durch Umsetzung des Reaktionsprodukts zwischen

(A) einer Magnesiumverbindung, ausgewählt unter

1) Verbindungen der Formel

$$X_nMg(OR)_{2-n},$$

worin X für Cl oder Br oder eine Gruppe —OH steht; R eine Alkyl-, Aryl- oder Cycloalkylgruppe mit 1 bis 20 Kohlenstoffatomen oder eine Gruppe COR′ wiedergibt, worin R′ für einen Kohlenwasserstoffrest, wie für R angegeben, steht; $0 \leqq n \leqq 2$;

2) MgO, $Mg(OH)_2$, XMgOH, worin X Cl oder Br beduetet; und

(B) einer Titan-, Vanadin- oder Zirkoniumverbindung mit zumindest zwei Metall-Sauerstoff-bindungen des Typs Ti—OR, V—OR oder Zr—OR, worin R für eine Alkyl-, Aryl- oder Cycloalkylgruppe mit 1 bis 20 Kohlenstoffatomen oder die Gruppe

$$CH_3—\overset{|}{C}=CH—CO—CH_3 \text{ steht,}$$

mit einer Siliciumkomponente (umfassend ein oder zwei Siliciumverbindungen), die eine halogenierende und eine reduzierende Wirkung oder eine reduzierende Wirkung aufweist, und hiernacht mit

(C) einer halogenierten Verbindung eines Übergangsmetalls der Gruppen IV, V oder VI des Periodensystems der Formel $MO_mX_n$, worin M=Übergangsmetall, X=Cl oder Br, $m \geqq 0$, $n>0$, wobei $2m+n$ der Wertigkeit des Metalls M entspricht.

2. Katalysatorkomponenten gemäß Anspruch 1, bestehend aus dem Produkt, das durch Umsetzung des Reaktionsprodukts zwischen $MgCl_2$ und $Ti(O{-}n{-}C_4H_9)_4$ mit einer Mischung von $SiCl_4$ und Polymethylhydrosiloxan und hiernach mit $TiCl_4$ erhalten wird.

3. Katalysatorkomponenten gemäß Anspruch 1, bestehend aus dem Produkt, das durch Umsetzung des Reaktionsprodukts zwischen $MgCl_2$ und $Ti(O{-}n{-}C_4H_9)_4$ mit einer Mischung von $SiCl_4$ und Polymethylhydrosiloxan und hiernach mit $VOCl_3$ erhalten wird.

4. Katalysatorkomponenten gemäß Anspruch 1, bestehend aus dem Produkt, das durch Umsetzung des Reaktionsprodukts zwischen $MgCl_2$ und $Ti(O{-}n{-}C_4H_9)_4$ mit Polymethylhydrosiloxan und hiernach mit $TiCl_4$ erhalten wird.

5. Katalysatoren zur Polymerisation von Ethylen und Mischungen hiervon mit Alpha-Olefinen, bestehend aus einer Kombination einer Katalysatorkomponente gemäß einem der Ansprüche 1 bis 4 oder einer Katalysatorkomponente, enthaltend das Produkt, das durch Umsetzung des Reaktionsprodukts zwischen der Verbindung (A) und der Verbindung (B), wie in Anspruch 1 definiert, in einer Stufe mit der Verbindung (C), wie in Anspruch 1 definiert, erhalten wird, mit einer Aluminiumalkylverbindung.

6. Katalysatoren gemäß Anspruch 5, bestehend aus einer Kombination einer Katalysatorkomponente, erhalten durch Umsetzung des Reaktionsprodukts zwischen $MgCl_2$ und $Ti(O{-}n{-}C_4H_9)_4$ mit $TiCl_4$, mit einer Aluminiumalkylverbindung.

7. Katalysatoren gemäß Anspruch 5, bestehend aus einer Kombination des Produkts, erhalten durch Umsetzung von $TiCl_4$ mit dem Reaktionsprodukt zwischen $MgCl_2$ und $Ti(OC_2H_5)_4$, mit einer Aluminiumalkylverbindung.

8. Verfahren zur Polymerisation von Ethylen und Mischungen hiervon mit Alpha-Olefinen, dadurch gekennzeichnet, daß es in Gegenwart eines Katalysators gemäß einem der Ansprüche 5 bis 7 durchgeführt wird.

**Revendications**

1. Constituants catalytiques formés d'un produit obtenu par réaction du produit résultant de la réaction entre:

(A) un composé du magnésium choisi parmi:

1) les composés de formule:

$$X_nMg(OR)_{2-n}$$

dans laquelle: X est Cl ou Br ou le groupe —OH; R est un radical alkyle, un radical aryle ou un radical cycloalkyle comprenant de 1 à 20 atomes de carbone, ou un groupe COR' dans lequel R' est un radical hydrocarboné semblable à R; $0 \leq n \leq 2$;

2) MgO, $Mg(OH)_2$, XMgOH, dans lesquels X est un atome de chlore ou de brome; et

(B) un composé du titane, du vanadium ou du zirconium, comprenant au moins deux liaisons métal-oxygène du type Ti—OR, V—OR ou Zr—Or où R est un radical alkyle, un radical aryle ou un radical cycloalkyle comprenant de 1 à 20 atomes de carbone, ou le groupe

$$\overset{|}{CH_3{-}C}{=}CH{-}CO{-}CH_3$$

avec un composé du silicium (comprenant un ou deux composés du silicium) présentant une action halogénante et réductrice ou une action réductrice et ensuite avec:

(C) un composé halogéné d'un métal de transition des groupes IV, V, VI de la Classification Périodique, présentant la formule: $MO_mX_n$ dans laquelle: M est un métal de transition; X=Cl ou Br; $m \leq 0$; $n>0$; $2m+n$ étant égal à la valence du métal M.

2. Constituants catalytiques selon la revendication 1, consistant en le produit que l'on obtient par réaction du produit de la réaction entre $MgCl_2$ et $Ti(O{-}n{-}C_4H_9)_4$ avec un mélange de $SiCl_4$ et de polyméthylhydrosiloxane puis avec $TiCl_4$.

3. Constituants catalytiques selon la revendication 1, consistant en un produit qui l'on obtient par réaction du produit de la réaction entre $MgCl_2$ et $Ti(O{-}n{-}C_4H_9)_4$ avec un mélange de $SiCl_4$ et de polyméthylhydrosiloxane puis avec $VOCl_3$.

4. Constituants catalytiques selon la revendication 1, consistant en un produit que l'on obtient par réaction du produit de la réaction entre $MgCl_2$ et $Ti(O{-}n{-}C_4H_9)_4$ avec du polyméthylhydrosiloxane puis avec $TiCl_4$.

5. Catalyseurs de polymérisation d'éthylène et de ses mélanges avec des alpha-oléfines consistant en une combinaison d'un constituant catalytique selon l'une quelconque des revendications 1 à 4 ou d'un

constituant catalytique comprenant un produit qui est obtenu par réaction du produit de la réaction entre le composé (A) et le composé (B) tels que définis dans la revendication 1, en une étape avec un composé (C) tel que défini dans la revendication 1, et avec un composé d'alkyl-aluminium.

6. Catalyseurs selon la revendication 5, consistant en la combinaison d'un constituant catalytique obtenu par réaction du produit de la réaction entre $MgCl_2$ et $Ti(O-n-C_4H_9)_4$ avec $TiCl_4$ et un composé d'alkyl-aluminium.

7. Catalyseurs selon la revendication 5, consistant en la combinaison du produit obtenu par réaction de $TiCl_4$ avec le produit de la réaction entre $MgCl_2$ et $Ti(OC_2H_5)_4$ et un composé d'alkyl-aluminium.

8. Procédé de polymérisation de l'éthylène et de leurs mélanges avec des alpha-oléfines, caractérisé en ce qu'il est mis en oeuvre en présence d'un catalyseur selon l'une quelconque des revendications 5 à 7.